# EUROPEAN PATENT SPECIFICATION

(11) **EP 3 509 727 B1**
(45) Date of publication and mention of the grant of the patent: **07.06.2023**
(21) Application number: 17849356.5
(22) Date of filing: 01.09.2017
(51) Int. Cl.: B01D 61/58, B01D 61/00, C02F 1/44, C02F 1/48, C02F 1/00

(54) **METHODS FOR CONTINUOUS FLOW SEPARATION OF PARTICLES BY GAS DISSOLUTION**
VERFAHREN ZUR KONTINUIERLICHEN FLUSSTRENNUNG VON PARTIKELN DURCH GASAUFLÖSUNG
PROCÉDÉS DE SÉPARATION DE FLUX CONTINUE DE PARTICULES PAR DISSOLUTION DE GAZ

(30) Priority: 06.09.2016 US 201662383719 P
(43) Date of publication of application: 17.07.2019
(73) Proprietor: The Trustees of Princeton University, Princeton, NJ 08540 (US)
(72) Inventor: STONE, Howard A., Princeton, New Jersey 08540 (US); SHARDT, Orest, Princeton, New Jersey 08540 (US); SHIN, Sangwoo, Honolulu, Hawai 96822 (US); WARREN, Patrick B., Bebington Wirral CH63 3JW (GB)
(74) Representative: ATIP
(86) International application number: PCT/US2017/049819
(87) International publication number: WO 2018/048735

(56) References cited:
- CA-A1- 2 909 003
- US-A- 4 533 447
- US-A1- 2003 094 369
- US-A1- 2015 175 447
- SANGWOO SHIN ET AL: "Membraneless water filtration using CO2", NATURE COMMUNICATIONS, vol. 8, no. 15181, 2 May 2017 (2017-05-02) , pages 1-6, XP055614193, DOI: 10.1038/ncomms15181
- HYUNGKOOK JEON ET AL: "Ion concentration polarization-based continuous separation device using electrical repulsion in the depletion region", SCIENTIFIC REPORTS, vol. 3, no. 1, 19 December 2013 (2013-12-19), pages 1-6, XP055373556, DOI: 10.1038/srep03483
- ABECASSIS ET AL.: 'Boosting migration of large particles by solute contrasts' NATURE MATERIALS vol. 7, no. 10, 17 August 2008, pages 785 - 789, XP055497525
- SHIN ET AL.: 'Membraneless water filtration using C02' NATURE COMMUNICATIONS vol. 8, no. 15181, 02 May 2017, pages 1 - 6, XP055497525

## Description

The present invention claims priority to US Serial No. 62/383719, filed 06.Sep.2016.

The invention relates to a continuous method for the separation of charged particles.

Fluid transport that is driven by gradients of pressure, gravity, or electro-magnetic potential is well-known and studied in many fields. A subtler type of transport, called diffusiophoresis, occurs in a gradient of chemical concentration, either electrolyte or non-electrolyte. Diffusiophoresis has been defined as the migration of a particle in a solution or a suspension (i.e., colloidal suspension) in response to the macroscopic concentration gradient of a solute that interacts with the surface of the particle; depending upon the charge of particles the particle may move in a specified direction.

Although the mechanism of diffusiophoresis is itself well-known, the diffusiophoresis mechanism is often considered to be an esoteric laboratory phenomenon, and has not been found to be particularly useful in larger scale separation processes which lend themselves to industrial applications.

The publication, "Boosting Migration of Large Particles by Solute Contrasts" by B. Abecassis, C. Cottin-Bizonne, C. Ybert, A. Ajdari and L. Bocquet, Nat. Mater., 7, (2008), pp..785-789 describes particle diffusiophoresis, but does not disclose any other mechanisms for creating an ion gradient in a liquid by the use of a dissolved gas in the liquid to form such ion concentration gradients.

HYUNGKOOK JEON ET AL: "Ion concentration polarization-based continuous separation device using electrical repulsion in the depletion region", SCIENTIFIC REPORTS, vol. 3, no. 1, 1 December 2013, pages 1-6 discloses an electrophoretic process.

US4533447 discloses a method for separation of proteins by flowing an aqueous feed stream of a mixture of proteins between first and second gas permeable membranes, diffusing a gas through the membranes and thereby create a gradient in the concentration of gas and pH, and separating the feed stream into streams containing concentrated fractions of proteins having defined isoelectric points.

The present invention comprises a method for the separation of charged particles from a stream of water as set out in the Claims.

In the following description, wherever the word "liquid" is used the word "water" is meant.

The method operates on the principle of separating charged particles in a flowing suspension by dissolving gas into the suspension to form a concentration gradient of ions within the liquid, which concentration gradient causes the migration of the suspended particles due to diffusiophoresis to different regions within the flowing suspension which creates regions of high and low particle concentration, which are thereafter then separated from one another. The method may be practiced as a single separation process or multiple single separation processes may be practiced in parallel and/or serial fashion as described in more detail hereinafter.

The claimed method may be used to supplement, complement, or as a replacement for existing filtration technologies.

The claimed process offers at least several key advantages over conventional filtration techniques. First, the separated particles from the flowing suspension do not accumulate on a surface (i.e., a filter or filter substrate) over time, which causes a pressure drop across the surface, and consequently imposes that the filtration apparatus be taken offline in order to permit for the cleaning or replacement of the surface. Second, the method of the invention does not require the transport of the suspension through filter media, such as filters or membranes, causing clogging thereof and a consequent pressure drop across such filter media, which would reduce operating efficiency. Thirdly the separation of the particles is operable in a dynamic manner, that is to say does not rely upon the static storage of a quantity of the suspension to allow for flocculation to occur in order to cause separation of particles from a liquid carrier or liquid phase. Fourthly the devices used in the invention require little or no maintenance, particularly as no filter media requires replacement. Other advantages will be understood from a further reading of this specification.

The claimed method is used to separate charged particles from water within which the charged particles are entrained or are suspended, i.e. a colloid.

The charged particles are responsive to an ion gradient present within the liquid within the disclosed device, such that wherein a region having an ion concentration gradient is present in the liquid, the particles will move in one direction within this gradient. The ion concentration gradient is present in the liquid and oriented in a direction which is angled with respect to or which is more preferably transverse to the direction of a flowing liquid comprising the charged particles, such that the movement of the charged particles occurs within this ion concentration gradient as a result of phoretic motion induced upon the particles, thus creating regions of high and low particle concentration within the liquid which are subsequently separated from one another.

The disclosed device and claimed method may be used to separate differently charged particles from within the water. For example particles having a positive charge may be separated from particles having a negative charge may be separated from each other using the disclosed device and claimed method. The charged particles are responsive to an ion gradient present within the liquid within the disclosed device, such that wherein a region having an ion concentration gradient is present in the liquid, particles of various sizes and shapes, different charges (i.e., negative, or positive) and/or of differing magnitudes will move in different directions within this gradient.

The ion concentration gradient within the liquid is formed by first introducing a gas which is soluble in containing liquid which will generate ions within the liquid. Not encompassed by the wording of the claims, one or more of the following gases may be used: H₂S, HCN, HC1, HBr, HF, HI, Cl₂, N₂O₄, NO₂, SO₂, SO₃, and NH₃, most of which form aqueous acidic species in water. Ammonia forms a basic solution but still forms ions within the liquid. Also useful are volatile organic acids whose vapour pressures and solubilities in water are sufficiently high at operating conditions of the process. Volatile organic acids include methanoic (formic) acid, which at 1 atmosphere has a boiling point of 100°C, ethanoic (acetic) acid, which at one atmosphere has a boiling point of 118°C . Others not particularly listed here may also be used as well while not being encompassed by the wording of the claims.

According to the claimed invention, the gas is CO₂ which in water undergoes the following reversible reaction:

CO₂ + H₂O <==>H⁺ + HCO₃⁻

forming dissolved carbonic acid in water, and thus providing dissolved ions in the water. Other ionic species may be formed using one or more different gases, and a plurality of differing ionic species may be present in and useful in forming the ionic concentration gradient. Second, the gradient is established by exposing the charged particle containing liquid to a pressure gradient of the one or more gases spanning the liquid. Such may be effectuated by locating the liquid in a channel having a volume (or plenum) which has at least a first portion or wall of a gas permeable material, and at least a second and separate second portion or wall of a gas permeable material which are both transmissive to the gas used and which effectively contains the charged particle containing liquid. The gas pressure present at the first portion or wall, is greater or lesser than the gas pressure at the second portion or wall such that the differential between these pressures ensures at the gas permeates a respective portion or wall and dissolves in the liquid, and in part forms a dissolved ionic species, the other portion or wall at a lower relative gas pressure ensures that the concentration of the gas does not reach a saturation level thereby ensuring that an ion concentration gradient is formed within the charged particle containing liquid between these portions or walls. In one embodiment the gas behind the first portion or wall and the second portion or wall are both at higher than atmospheric pressure, but at different relative pressures.

In another embodiment the gas behind one of the portions or walls is at a pressure above atmospheric pressure while the other portion or wall is at atmospheric pressure and does not necessarily contain the gas, but may be open to the ambient atmosphere. In a further embodiment one of the portions or walls is exposed to a vacuum.

An ionic concentration gradient is formed and existing between parts of the channel between a first portion or wall of a gas permeable material and a second portion or wall of a gas permeable material.

The concentration of the dissolved ionic species present within the liquid can be controlled by establishing a desired pressure gradient of the soluble gas across the liquid, that is to say a desired pressure gradient is established to the first portion or wall and the second portion or wall. As the soluble gas may be used with or without other inert gases, i.e., in a mixture, the pressure of the soluble gas controls the concentration of the dissolved ion species present in the liquid as other inert gases, if present, may not necessarily pass into liquid or if present in the liquid may not form a dissolved ionic species within the liquid which would be useful in a separation process. The relative ratio of the gas pressure(s) behind the first portion or wall and the gas pressure behind second portion or wall is preferably 100:0, as the value of zero contemplates that the gas pressure behind the second portion or wall is actually a vacuum. Preferably however the relative ratio is in the range of between about 100:0.1; more preferably is between about: 100:1, 50:1; 40:1, 30:1, 25:1, 20:1, 15:1, 10:1, 9:1, 8:1, 7:1, 6:1, 5:1, 4:1, 3:1, 2:1 and 1.5:1. Optimal pressures of the device used in the invention will of course vary by the nature of the liquid and the solubility of the gas within the liquid, and may be established by reference to known solubility parameters and/or via routine analytical methods by operating a device according to the invention as a desired flowrate of the liquid and with a desired gas, and varying the desired pressure gradient across the liquid in order to determine the resultant degree of solubility of the gas, and the ionic concentration gradient established within the liquid, which in turn will vary the degree of separation of the charged particles using the device.

The control of the temperature of the liquid containing the charged particles also influences the ionic concentration gradient as the liquid temperature directly influences the solubility of the dissolved ionic species. Thus, control of this temperature may be used in addition to the control via establishing a desired pressure gradient across the liquid as described herein. Optimal temperatures will of course vary by the nature of the liquid and the solubility of the gas within the liquid, and may be established by reference to known solubility parameters and/or via routine analytical methods by operating a device according to the invention as a desired flowrate of the liquid and with a desired gas, and varying the temperature in order to determine the resultant degree of solubility of the gas, and the ionic concentration gradient established within the liquid, which in turn will vary the degree of separation of the charged particles using the device.

The nature of the particles to be separated may vary widely and it is contemplated that they have a net positive or negative charge when present within the liquid when within the device usable in the invention, such that they may be moved by phoretic motion induced upon the particles by the presence of dissolved ionic species with the liquid, which ionic species is formed by a the in-situ reaction of gas entering the liquid and the liquid itself; preferably the dissolved ionic species is formed by a reversible in-situ reaction. Two or more different types of particles having different charges may be simultaneously separated from a liquid. Such may have different charges, i.e., positive, negative charges. The particles themselves may be biological or non-biological materials. Their size is non-limiting; it is only required that they be suspended or entrained within a liquid and be responsive to the phoretic motion induced by the dissolved ionic species in the liquid. In a certain embodiment, the charged particles are microbiological organisms such as bacterium and/or may be pathogens. In further embodiments, the particles are non-biological materials which have a net charge or a surface charge which may be either positive or negative.

According to the invention, a first gas channel is present behind the first portion or wall, and a second gas channel is present behind the second portion or wall; the gas present in a respective channel may migrate into the liquid in the channel across the said first portion or wall and the second portion or wall. The first and the second gas channels may be attached to a suitable source or pressurized gas, or may be open to the atmosphere, or may be attached to a suitable apparatus or source of vacuum.

In a preferred embodiment the channel has a non-circular cross-section or is a tube having a circular cross-section as described in more detail hereinafter and as depicted in one or more of the drawings.

In the following, where the word "cavity" is used this may be read as "channel".

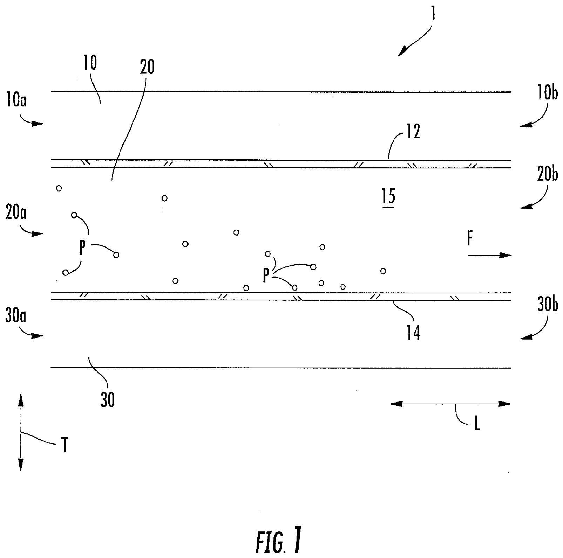

Fig. 1 illustrates a schematic depiction of a continuous flow particle separation device 1 having a first, pressurized (or pressurizable) cavity 10 or plenum adapted to contain a gas, separated by a first gas permeable wall 12 from a second cavity 20 or plenum which contains a charged particle ("p") containing liquid 15 which also contains an ion species formed by the dissolution of the gas within the liquid, which is in turn separated by a second permeable wall 14 from the ambient atmosphere, or a third, relatively reduced pressure cavity 30 or plenum which may contain a gas or a vacuum; wherein the pressure present in the atmosphere or the third cavity 30 is lesser than that of the first cavity 10 thus forming an ion concentration differential within the liquid between first cavity and the atmosphere or the third cavity 30. The permeable walls 12, 14 operate to permit for the transfer of a gas from the first cavity 10 through the second cavity 20 and to the third cavity 30 or through the second permeable wall 14 to the atmosphere. In preferred devices at least the second cavity 20, but preferably each of the first, second and when present, the third cavities have a length dimension (schematically indicated by arrows "L") and an average transverse dimension (schematically indicated by arrows "T") which is measurable and which is generally or substantially perpendicular to the length dimension; preferably the length dimension is at least 10 times that of the average transverse dimension but is preferably even longer, e.g, at least 20, 30, 40, 50, 60, 70, 80, 90 or at least 100 times the average transverse dimension. Alternately the ratio of the length dimension: average transverse dimension, (sometimes is the average width or average diameter) of the second cavity is at least 10:1, preferably (and in order of increasing preference) is at least 25:1, 50:1, 100:1, 200:1, 300:1, 400:1, 500:1, and greater. Ensuring that the ratio of the length dimension is greater than the average transverse dimension, and preferably is a ratio of at least 10:1, but is preferably greater ensures that charged particle containing liquid 15 flowing (flow direction being indicated by arrow "F") in the liquid containing cavity 20 has ample surface area of both the first and second permeable walls to ensure for gas transfer between the first and second cavities, and that the second permeable wall forming part of the third cavity maintains a negative pressure gradient between the first cavity and the third cavity. Further ensuring that the ratio of the length dimension is greater than the average transverse dimension, preferably is at least 25:1 or more, as such relatively high ratios facilitates the establishment of non-turbulent flow of the charged particle containing liquid 15 transiting through the liquid containing cavity 20. The device usable in the invention may however also operate under turbulent flow conditions of the liquid 15 transiting through the liquid containing cavity 20. However in particularly preferred embodiments the device operates such that the liquid within the liquid containing cavity 20 is within the laminar flow regime.

The ratio of the length dimension is greater than the average transverse dimension is desirably selected in view of the nature of the particles to be separated, the bulk liquid and the operating liquid flow conditions of the particle containing liquid within the liquid containing cavity 20. Ideally the length is sufficient so to allow for a desired degree of particle separation from within the bulk liquid, at the operating conditions of the device usable in the invention.

The materials of construction of the device may be virtually any material which may be used to maintain a satisfactory pressure differential between the first and second cavities, and the second and third cavities so to allow for the methods of the invention operate as described herein. Such materials are desirably sufficiently rigid, and are chemically resistant, or chemically inert to any of the liquids and/or gas is being used in a separation process. Coming to consideration are any of a number of synthetic polymers, metals, ceramic materials, and the like. As to the construction of the cavities and/or intermediate walls which may be present, naturally these also additionally must exhibit the ability to allow for the diffusion or transfer of the gas used in the device and/or method between adjacent cavities. This will of course in no small part depend upon the operating characteristics of the device, and in particular the liquid, the nature of the particulates contained within the liquid, and that the gas to be used. Again, synthetic polymers, metals, ceramic materials, and in particular microporous materials which allow for the selective transfer diffusion of gas, but yet which retain liquid such as membranes of various types contemplated to be particularly useful. Non-limiting examples of such materials include: synthetic polymers such as silicone polymers, i.e., poly(dimethyl siloxane), poly(methyl propyl siloxane), poly(methyl octyl siloxane), poly(trifluoropropyl methyl siloxane), and poly(phenyl methyl siloxane); polyacetylenes and substituted polyacetylenes, i.e., poly(1-trimethylsilyl-1-propyne) (PTMSP), poly(4-methyl-2-pentyne) (PMP); polyolefins,i.e., polypropylene, poly(4-methyl-1-pentene); poly(2,6-dimethyl-1,4-phenylene oxide) (PPO); polyamides, aromatic polyamides (polyaramids); polyimides, fluorinated polyimides, i.e, 6FDA-DAF, 6FDA-TMDA (2,3,5,6-tetramethyl-1,4-phenylenediamine); polysulfones; polycarbonates; as well as those based on celluloses, i.e., ethyl cellulose, cellulose acetate, and cellulose triacetate. Other materials include hydrogels; microporous polymers, e.g. microporous PTFE; coated carbon paper/woven fabric as commonly used as a gas diffusion layer in fuel cells; natural polymers and ceramics.

A material which is advantageously used are polysiloxane-based polymers such as polydimethylsiloxane same having a sufficiently high molecular weight such that it provides both effective barrier characteristics to the liquid but at same time allow for the perfusion of the gas, i.e., carbon dioxide. Thickness of these materials, and a particular the thickness of the cavities and/or intermediate walls to allow both effective barrier characteristics of liquids, and yet a sufficiently high rate of gas transfer across such materials may be established empirically, or by routine experimentation and will of course vary upon the configuration of a particular device to be fabricated, according to the present inventive teaching.

The configuration of the parts of a device are preferably arranged in such a manner that at least part of the first, second and third cavities are parallel with respect to one another with a region or part of the first and second cavities separated by a first permeable wall, and with a region or part of the first and second cavities separated by a second permeable wall. Nonlimiting parallel configurations are disclosed with respect to one or more of the drawings.

The first 10, second 20 and third cavities 30 each have an inlet and at least one outlet, respectively: a first cavity inlet 10a and a first cavity outlet 10b; a second cavity inlet 20a and a second cavity outlet 20b; and, a third cavity inlet 30a and a third cavity outlet 30b. The first, second and third cavities may be substantially straight, but may also be curved or contain both substantially straight sections and curved sections as well. The first and third cavities necessarily include an inlet and/or an outlet, but both are not usually essential, as, for example the first cavity may contain an inlet through which a quantity of a pressurized gas may be supplied, but no outlet would be required as the gas would be permeable through the permeable wall thereof and into the second cavity. Not dissimilarly the third cavity may contain an outlet, through which gas entering the third cavity via the second permeable wall may enter from the second cavity may be withdrawn such as by a vacuum, or may be allowed to vent to the ambient atmosphere. It is also foreseen that the third cavity may be connected to a vacuum source so to ensure that the pressure in the third cavity is reduced compared to the pressure extant in the first cavity. It is also foreseen (in a manner not encompassed by the wording of the claims) that the third cavity 30 may be absent, as the permeable wall 14 may be in direct contact with the ambient atmosphere (and exposed to 1 atm pressure.)

As the pressures within the first cavity 10 and the third cavity 30 differ, the concentration of the ionic species formed by the dissolved gas present in the liquid 15 varies transversely between the walls 12, 14. The concentration of the ionic species may also be in part controlled or influenced by the temperature of the liquid 15. Such induces the migration of the suspended particles P due to diffusiophoresis to different regions within the flowing suspension which creates regions of high and low particle concentration, which thereafter may be separated from one another. Such is schematically shown in Fig. 1; as is seen therein the local concentration of particles P adjacent to wall 14 is greater (within the same transverse location within the second cavity 20) than at wall 16. Thereby, the relative concentration of particles P within the liquid 15 differs in the flow direction F of the liquid and varies across the length of the second cavity 20. In such a manner, the liquid 15 may be divided downstream at one or more outlets 20b into separate streams, one having a higher relative concentration of the particles P than originally present at the inlet 20a (or "retentate"), the other having a lower relative concentration of the particles P than originally present at the inlet 20a (or "filtrate"). Such separation occurs without the need of a traditional filter medium, or membrane in order to achieve such separation. Such a separation occurs also without requiring any significant expenditure of energy as flow may be provided by gravity or with an energy efficient pumping means (i.e., mechanical pump).

The outlet of the second cavity 20 includes two or more outlets, with at least one (first) outlet containing and used to transport a quantity of the liquid containing a relatively reduced amount of the particulate, and at least one (second, or further) outlet containing a quantity of the liquid enriched in the particulate, both being relative to, or as compared to the liquid provided to the inlet 20a. In such a manner, the discrete concentration of the particles P within the different lamina of a liquid flowing through the second cavity 20 between its inlet and the outlet(s) may be controlled, and used as a separation process which does not require the use of a traditional filter medium through which the liquid must be allowed to, or forced to pass. Rather in the method of the present invention, the gas introduced in the first cavity migrates across the first permeable wall and into the particulate containing liquid flowing through the second cavity (or also referred to as the 'liquid cavity') wherein it becomes entrained, but preferably dissolved therein. The pressure differential across the second cavity, due to the relatively reduced pressure present in the third cavity induces gas transfer between the first and third cavity in a "net transverse direction". A difference in the partial pressures of the soluble gas is required; whereas the total pressure may be constant. The direction of the gas flow transverse to the longitudinal flow direction of the particulate containing liquid ensures that a concentration gradient of the dissolved gas is present within the second cavity between the first and the third cavities, which in turn facilitates segregation of charged particles within the liquid.

The process of the invention may also be used to concurrently separate two (or more) different types of species of charged particles as well.

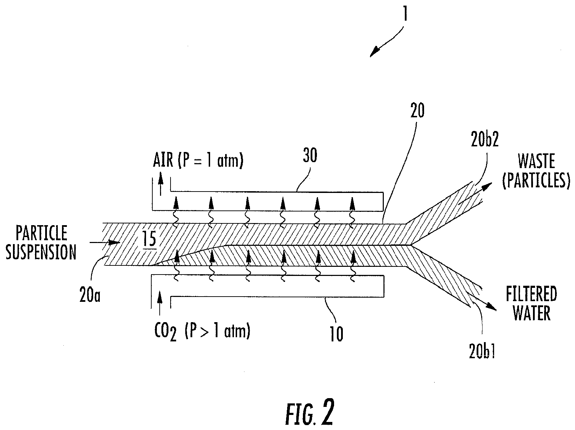

With reference now to Fig. 2, therein is depicted schematic of a continuous flow membrane-less filtration device 1 usable for the invention, which here is depicted as being used as a water filtration device and utilizes CO₂ as a gas for forming the dissolved ionic species within water being pumped through the liquid cavity of the device. The formation of the dissolved ionic species separates differently charged biological and non-biological materials entrained within the liquid, into two output liquid streams a first outlet stream 20b1 (" filtered water") and a second outlet stream 20b2 (labeled "waste (particles):).

Such devices may be used singly (or a "unit device", which may be identified hereinafter in a dotted line box labeled "A"), or a plurality of such devices may be operated concurrently. Two or more such devices may be operated in serial fashion, in a parallel fashion or in a combination of both.

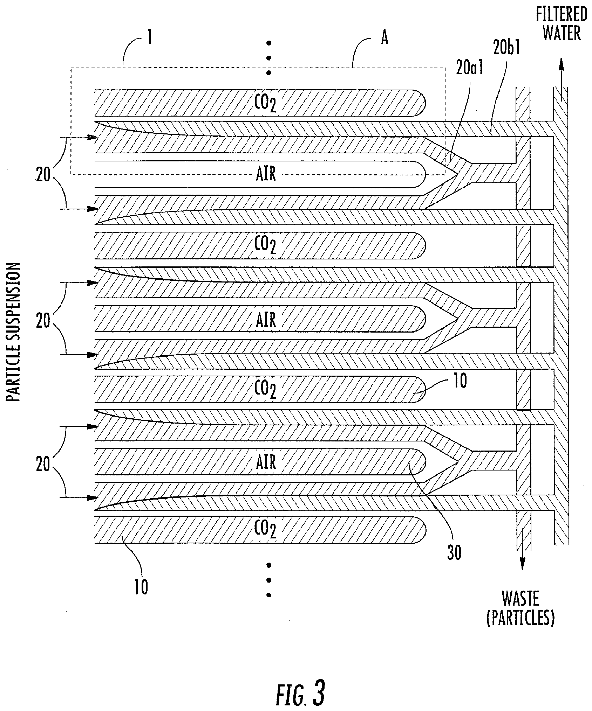

Fig. 3 depicts an array of individual devices 1 (one of which is labeled "A") usable in the invention which are simultaneously operable in a parallel manner, wherein a liquid containing charged particles, e.g., a suspension or colloid, is separated via corresponding outlets 20al and 20b1 into a filtered water stream and a waste stream. As can be understood from consideration of the drawing, each inlet 20 of each device 1 is connected to a common source of the liquid containing charged particles ("particle suspension"), which are fed into the individual devices arrayed in parallel. It is to be noted that such a placement allows for two important features: (a) the placement of the first chamber containing, in this embodiment CO₂ alternates with that of the third chamber containing air, or more accurately are chambers open to the atmosphere in the ambient environment, such allows for the product of a physically more compact array of unit devices. As is also seen in Fig. 3, each of the unit devices has a plurality of outlets connected respectively to common outlet manifolds, one for receiving a filtrate ("Filtered water") or a retentate ("Waste (particles)").

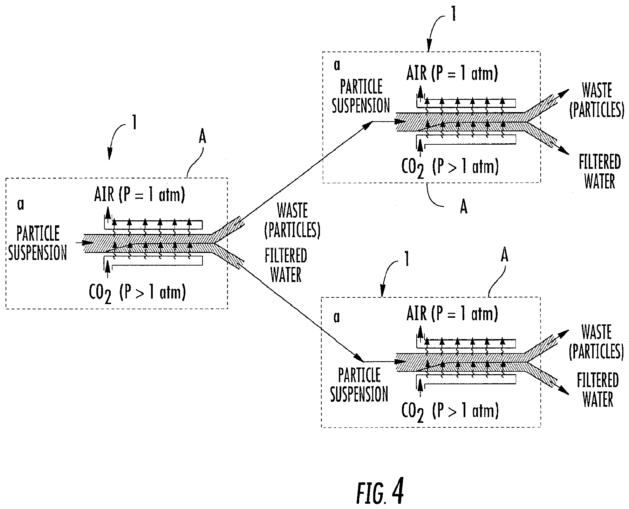

While not shown in either of Figs. 1, 2 or 3, it is to be understood that any of the outlets of unit devices, whether used singly or in a plurality of such devices, may be connected to the inlets of one or more further unit devices A usable in the invention. Such is schematically depicted in Fig. 4. In such a manner serial filtration processes can be practiced, thereby providing further degrees of improved separation of charged particles originally present in the liquid. As such may also advantageously increase the overall operating efficacy of separation of charged particles, and, as the unit devices do not require filtration medium and require little power in order to ensure the operation; in some embodiments the use of a plurality of unit devices is preferred. It is also to be understood that in such a configuration as depicted in Fig. 4, that an intermediate step occurs, in which any dissolved gas at an outlet of a stage is removed or vented out, prior to the entry of the liquid into a next stage.

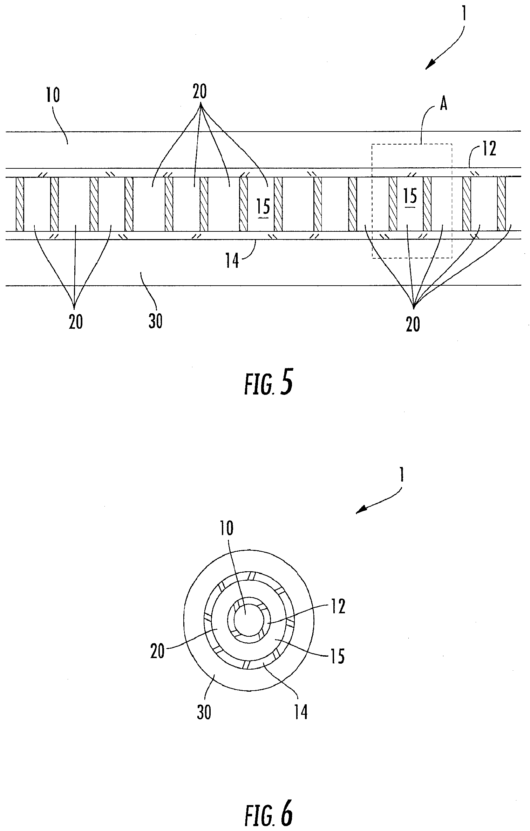

Figs. 5 and 6 illustrate cross-sectional views of devices usable in the invention having different configurations.

In Fig. 5 is depicted a series of parallel channels each which define a second cavity 20 (or container, or plenum) each adapted to contain the charged particle containing liquid 15 bounded on one side by a first gas permeable wall 12 forming a barrier with a first, pressurized (or pressurizable) cavity 10 adapted to contain a gas, and bounded on another side by a second gas permeable wall 14, forming a barrier with a third, relatively reduced pressure cavity 30 which may contain a gas or a vacuum or which may be open to the ambient atmosphere. The depicted device may be formed into an ordered array of such elements in a manner generally disclosed in Fig. 3 with each of the individual parallel channels 20 operating in conjunction with adjacent regions of the first gas permeable wall 12 and second gas permeable wall 14 and corresponding cavities 10, 30 as individual unit devices A; such that the plurality of channels 20 function as a compact array of unit devices operating in parallel.

Fig. 6 depicts a schematic cross-section of a different device usable in the invention than previously shown. In this device, the first cavity 10 is within the second cavity 20, and both the first and second cavities are within the third cavity 30. In the depicted device the first gas permeable wall 12 and the second gas permeable wall 14 are each tubular in configuration, and are substantially concentric. The third cavity 30 may be of any configuration, or as previously noted can be omitted (in a manner not encompassed by the wording of the claims) as leaving the second gas permeable wall 14 open to the atmosphere if such is desired.

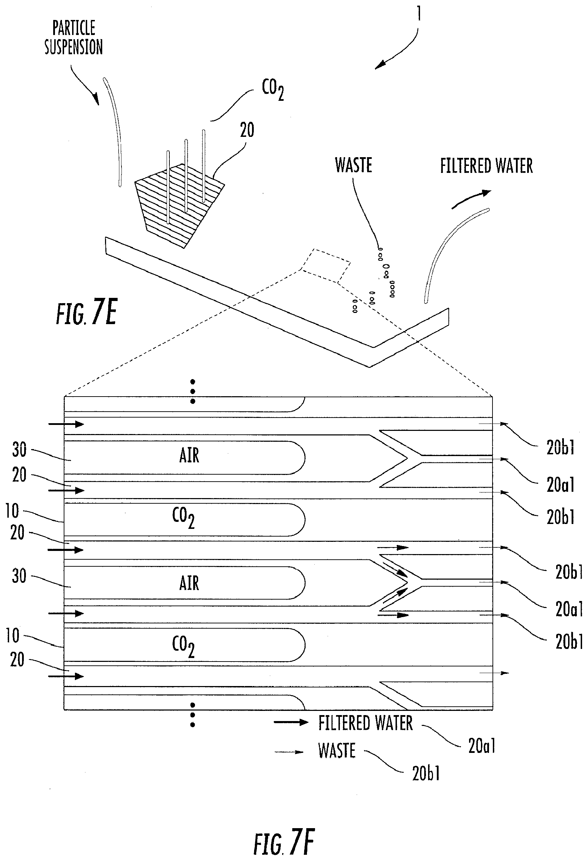

Fig. 7e depicts a device usable in the invention having a series of 10 parallel and longitudinal second channels 20 (or "flow channels") for containing flowing liquid containing charged particles, and parallel first cavities 10 for containing pressurized CO₂ gas, and further third cavities 30 open to the ambient atmosphere, and at a reduced pressure relative to the CO₂ gas. The device operates in a manner as disclosed in Fig. 3.

The device 1 was constructed from a polydimethylsiloxane material ("Sylgard 184 Elastomer") kit, ex. Dow Corning) using a conventional soft lithography technique. The monomer and crosslinker provided in the kit were mixed that it was ratio of 10:1. The second channels 20 has a width of 0.1 mm, a height of 0.02 mm and a length of 30 mm. The thickness of the polydimethylsiloxane material used to provide the gas permeable walls 12, 14 was 30 microns.

When operating the second channels had a flow rate of 2 µl/h; and the pressure drop across the channel was Δ*p≈*0.2 kPa. The device was used to separate negatively charged particles present in a stream of deionized water, pumped through the apparatus using a syringe pump ("PhD Ultra", ex Harvard Apparatus.)

The foregoing device was also used in the same manner to evaluate separation of positively charged particles as well. However, in order to avoid undesired adhesion of the positively charged particles to the walls of the second channels 20, first they were contacted by a 1% aqueous solution of 3-aminopropyltrimethoxysilane (ex. Sigma-Aldrich) was pumped through the second channels for 20 minutes, followed by rinsing with deionized water for 10 minutes. Thereafter, a liquid containing positively charged particles was provided to the device.

Fig. 7f is an "enlarged view" of part of the device illustrating a detail of the first 10, second 20 and third cavities 30, and how in operation charged particles are separated into separate outlets 20al, 20b1. As is seen then, the filtrate stream, ("filtered water"), is separated from a retentate stream ("Waste") which has a different concentration of charged particles than the filtrate stream.

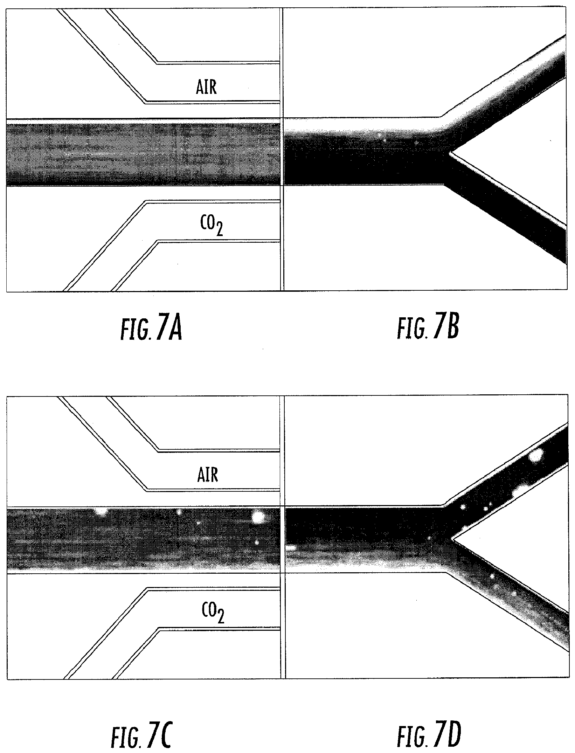

This behavior is illustrated in the following Figs. 7a, 7b, 7c and 7d which are fluorescence microscopy images of negatively charged particles (Fig. 7a, 7b) and positively charged particles (Fig. 7c, 7d) migrating transverse the flow direction within a second cavity of a unit device. The pressure of the CO2 gas in the first cavity 10 was maintained at 10 psig. The thickness of the intermediate walls between the first 10, second 10 and third cavities 30 was 30 microns. Water was the bulk liquid, at room temperature (24°C). Figs. 7a, 7b illustrate the behavior of negatively charged polystyrene particles having a diameter of 0.5 microns, which as first illustrated in Fig. 7a are generally uniformly distributed in the liquid, but as seen in Fig. 7b, these particles are shown as migrating away from the wall that is adjacent to the CO₂ containing cavity as they flow downstream. Figs. 7c, 7d illustrate the behavior of positively charged amine-functionalized polystyrene particles having a diameter of 1 micron, which as first illustrated in Fig. 7c are generally uniformly distributed in the liquid, but as seen in Fig. 7b, these particles are shown as migrating away from the wall that is opposite wall, and away from the wall bounding the CO₂ containing cavity and towards the wall in contact with ambient air as they flow downstream, as a result of diffusiophoresis.

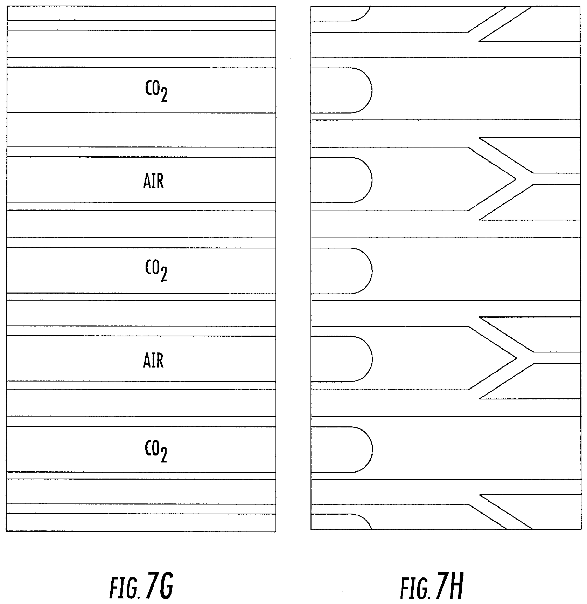

Figs. 7g, 7h are fluorescence microscopy images of negatively charged particles near the inlet of the cavities 20 containing the liquid and the charged particles (Fig. 7g) in the region of the outlets of the cavities; here the device was operated such that the CO₂ pressure was 5 psig. As is seen from the different densities of the particles shown in Fig. 7h, effective separation of particles is achieved, as a result of diffusiophoresis.

The method of the invention may be used in any application which would benefit from such a separation technology, which as disclosed does not require the use of convention filtration media such as porous filters, such as fibrous, metal or ceramic filters or membranes, nor require establishing an electrical field such as may be required in electrolytic separation processes.

## Claims

1. A continuous method for the separation of charged particles from a stream of water in a device (1) comprising
a first channel (10) adapted to contain a gas
separated by a first gas permeable wall (12) from
a second channel (20), the second channel (20) comprising one inlet (20a) and at least two outlets (20b),
the second channel (20) being separated by a second gas permeable wall (14) from a third channel (30),
the permeable walls (12, 14) permitting the transfer of a gas from the first channel (10) through the first gas permeable wall (12) to the second channel (20) and through the second gas permeable wall (14) to third channel (30);
the method comprising:
flowing the stream of water and charged particles through the second channel(20) from inlet (20a) to outlets (20b),
supplying a pressurized gas comprising CO₂ to the first channel (10) to pressurise the first channel (10), whereby CO₂ flowing into the first gas channel (10) passes through the gas-permeable wall (12),
operating the device (1) with a pressure of the CO₂ in the third channel (30) being lower than the pressure of the CO₂ in the first channel (10) to establish a pressure gradient of the soluble gas within the water, thereby causing the formation of ionizable species within the water resulting in an ionic concentration gradient within the water causing the migration of the suspended charged particles transverse to flow direction due to diffusiophoresis to different regions within the flowing suspension,
whereby the flow entering a first outlet (20b1) of the second channel (20) receives a lower relative concentration of the charged particles than originally present at the inlet (20a), and the flow entering a second outlet (20b2) of the second channel (20) receives a higher relative concentration of the charged particles than originally present at the inlet (20a), the charged particles having a net positive or negative charge when present within the liquid when within the device (1).

2. A method as claimed in Claim 1, wherein:-
the gas is CO₂ at above atmospheric pressure,
the third channel (30) is open to air,
the flow entering the first outlet (20b1) of the second channel (20) is a filtered water stream, and
the flow entering the second outlet (20b2) of the second channel (20) is a waste stream.

## Patentansprüche

1. Kontinuierliches Verfahren zur Abscheidung geladener Teilchen aus einem Wasserstrom in einer Vorrichtung (1), umfassend
einen ersten Kanal (10), der geeignet ist, ein Gas zu enthalten
durch eine erste gasdurchlässige Wand (12) ab getrennt
einen zweiten Kanal (20), wobei der zweite Kanal (20) einen Einlass (20a) und mindestens zwei Auslässe (20b) umfasst,
wobei der zweite Kanal (20) durch eine zweite gasdurchlässige Wand (14) von einem dritten Kanal (30) getrennt ist,
wobei die durchlässigen Wände (12, 14) den Transfer eines Gases vom ersten Kanal (10) durch die erste gasdurchlässige Wand (12) zum zweiten Kanal (20) und durch die zweite gasdurchlässige Wand (14) zum dritten Kanal ermöglichen (30);
wobei das Verfahren umfasst:
leiten des Stroms aus Wasser und geladenen Partikeln durch den zweiten Kanal (20) vom Einlass (20a) zu den Auslässen (20b),
zuführen eines unter Druck stehenden Gases, das CO₂ umfasst, zu dem ersten Kanal (10), um den ersten Kanal (10) unter Druck zu setzen, wodurch CO₂, das in den ersten Gaskanal (10) strömt, durch die gasdurchlässige Wand (12) strömt,
betreiben der Vorrichtung (1) mit einem Druck des CO₂ im dritten Kanal (30), der niedriger ist als der Druck des CO₂ im ersten Kanal (10), um einen Druckgradienten des löslichen Gases innerhalb des Wassers aufzubauen, wodurch bewirkt wird, dass Bildung von ionisierbaren Spezies innerhalb des Wassers, was zu einem Ionenkonzentrationsgradienten innerhalb des Wassers führt, was die Wanderung der suspendierten geladenen Teilchen quer zur Strömungsrichtung aufgrund von Diffusiophorese zu verschiedenen Regionen innerhalb der fließenden Suspension verursacht,
wodurch die in einen ersten Auslass (20b1) des zweiten Kanals (20) eintretende Strömung eine geringere relative Konzentration der geladenen Teilchen als ursprünglich am Einlass (20a) vorhanden erhält, und die in einen zweiten Auslass (20b2) des zweiten Kanals eintretende Strömung (20) erhält eine höhere relative Konzentration der geladenen Teilchen als ursprünglich am Einlass (20a) vorhanden, wobei die geladenen Teilchen eine positive oder negative Nettoladung aufweisen, wenn sie in der Flüssigkeit vorhanden sind, wenn sie sich in der Vorrichtung (1) befinden.

2. Verfahren nach Anspruch 1, wobei:-
das Gas ist CO₂ bei überatmosphärischem Druck,
der dritte Kanal (30) ist offen für Luft,
der Strom, der in den ersten Auslass (20b1) des zweiten Kanals (20) eintritt, ein gefilterter Wasserstrom ist, und
der Strom, der in den zweiten Auslass (20b2) des zweiten Kanals (20) eintritt, ein Abfallstrom ist.

## Revendications

1. Procédé continu de séparation de particules chargées d'un courant d'eau dans un dispositif (1) comprenant
un premier canal (10) adapté pour contenir un gaz
séparés par une première paroi perméable aux gaz (12) de
un deuxième canal (20), le deuxième canal (20) comprenant une entrée (20a) et au moins deux sorties (20b),
le deuxième canal (20) étant séparé par une deuxième paroi perméable aux gaz (14) d'un troisième canal (30),
les parois perméables (12, 14) permettant le transfert d'un gaz du premier canal (10) à travers la première paroi perméable aux gaz (12) vers le deuxième canal (20) et à travers la deuxième paroi perméable aux gaz (14) vers le troisième canal (30);
le procédé comprenant :
faire circuler le courant d'eau et de particules chargées à travers le deuxième canal (20) de l'entrée (20a) aux sorties (20b),
fournir un gaz sous pression comprenant du CO₂ au premier canal (10) pour pressuriser le premier canal (10), moyennant quoi le CO₂ s'écoulant dans le premier canal de gaz (10) passe à travers la paroi perméable au gaz (12),
faire fonctionner le dispositif (1) avec une pression du CO₂ dans le troisième canal (30) inférieure à la pression du CO₂ dans le premier canal (10) pour établir un gradient de pression du gaz soluble dans l'eau, provoquant ainsi la la formation d'espèces ionisables dans l'eau entraînant un gradient de concentration ionique dans l'eau provoquant la migration des particules chargées en suspension transversalement à la direction d'écoulement en raison de la diffusiophorèse vers différentes régions dans la suspension qui s'écoule,
moyennant quoi le flux entrant dans une première sortie (20b1) du second canal (20) reçoit une concentration relative inférieure des particules chargées à celle initialement présente à l'entrée (20a), et le flux entrant dans une seconde sortie (20b2) du second canal (20) reçoit une concentration relative plus élevée de particules chargées que celle présente à l'origine à l'entrée (20a), les particules chargées ayant une charge nette positive ou négative lorsqu'elles sont présentes dans le liquide lorsqu'elles se trouvent dans le dispositif (1).

2. Procédé selon la revendication 1, dans lequel :-
le gaz est du CO₂ à une pression supérieure à la pression atmosphérique,
le troisième canal (30) est ouvert à l'air,
le flux entrant dans la première sortie (20b1) du second canal (20) est un courant d'eau filtré, et
le flux entrant dans la deuxième sortie (20b2) du deuxième canal (20) est un flux de déchets.
